(19) Europäisches Patentamt
European Patent Office
Office européen des brevets

(11) **EP 1 731 845 A1**

(12) **EUROPÄISCHE PATENTANMELDUNG**

(43) Veröffentlichungstag:
**13.12.2006 Patentblatt 2006/50**

(51) Int Cl.:
*F24D 3/16* (2006.01)   *F28F 21/06* (2006.01)
*E04F 15/02* (2006.01)   *E04F 15/10* (2006.01)
*E04F 13/08* (2006.01)   *E04B 5/48* (2006.01)

(21) Anmeldenummer: 05012320.7

(22) Anmeldetag: **08.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Kamal, Mostafa, Dr.**
**42113 Wuppertal (DE)**

(72) Erfinder: **Kamal, Mostafa, Dr.**
**42113 Wuppertal (DE)**

(74) Vertreter: **Berg, Eike Karl**
**Berghof**
**Zur Ziegelei 8**
**24943 Tastrup/Flensburg (DE)**

Bemerkungen:
Geänderte Patentansprüche gemäss Regel 86 (2) EPÜ.

(54) **Flüssigkeitsdurchflutete Mittel zum Temperieren von Räumen**

(57)     Vorgeschlagen werden flüssigkeitsdurcnflutete Mittel zum Temperieren von Räumen
• mit einer ersten Abdeckplatte,
• mit einer der ersten Abdeckplatte gegenüberliegenden zweiten Abdeckplatte, die mit einer umlaufenden Aufkantung verbunden ist zur Ausbildung einer flüssigkeitsdichten Wanne,
• mit einer Vielzahl von Stegen, zwischen denen Durchflutungskanäle mit einer inneren Breite ($d$) im Inneren des durch die Wanne begrenzten Raums ausgebildet sind, wobei
die Durchflutungskanäle mit einer gemeinsamen Zuleitung und einer gemeinsamen Abführung verbunden sind, und
die Durchflutungskanäle zusammen mit der Zuleitung und der Abführung im Inneren des durch die Wanne begrenzten Raums ein Volumen ($V$) umschließen, durch das Flüssigkeit zum Temperieren von Räumen hindurchführbar ist,

dadurch gekennzeichnet, dass
o die durch die zweite Abdeckplatte mit der umlaufenden Aufkantung begrenzte Wanne mit der ersten Abdeckplatte verschlossen ist zur Ausbildung einer sauerstoffdichten Ummantelung des Volumens ($V$), wobei die auf das Volumen ($V$) bezogene Sauerstoffdichtheit $O_d$ der folgenden Formel genügt:

$$O_d \leq 0{,}10 \ g \ / \ (m^3 \cdot d)$$

Figur 1.

Printed by Jouve, 75001 PARIS (FR)

EP 1 731 845 A1

**Beschreibung**

Die Erfindung betrifft flüssigkeitsdurchflutete Mittel zum Temperieren von Räumen entsprechend dem Oberbegriff von Patentanspruch 1 sowie zahlreiche Ausführungsformen der erfindungsgemäßen Mittel.

Aus dem vorveröffentlichten Stand der Technik sind grundsätzlich in der Regel wasserdurchströmte Wärmetauscher mit eingearbeiteten Durchströmungskanälen bekannt. So schlägt beispielsweise die US-A-5,267,611 einen Wärmetauscher mit einer porösen Schicht als Zentralelement vor, das einerseits der nach außen abschließenden Heizfläche und andererseits einer Flüssigkeitsversorgungsschicht benachbart gelegen ist. Die Flüssigkeitsversorgungsschicht ist mit fortlaufenden, sich rechtwinkelig kreuzenden Kanälen durchzogen, die voneinander durch rechteckige "Insel"-Bereiche getrennt sind. Zur Wasserabdichtung des bekannten Wärmetauschers nach außen hin ist um die poröse Zentralschicht und um die Flüssigkeitsversorgungsschicht eine Abdichtungsschicht mit diese durchbrechenden Anschlussrohren vorgesehen, wobei durch Letztere der Flüssigkeitsaustausch ermöglicht wird.

Auch der SU 11 65 868-A ist der Vorschlag für einen Wärmetauscher zu entnehmen, der in seinem Inneren mit Paketen poröser Platten bestückt ist, zwischen denen nicht poröse Auskleidungen zur Ausformung von Kanälen vorgesehen sind. Der Wärmetauscher wird von einer Heizflüssigkeit durchströmt, die ihre Wärme beim Passieren der porösen Platten an den Wärmetauscher abgibt.

Aus der DE 197 80 808 T ist eine Betonplatte zur Luftkonditionierung bekannt, bei der unterhalb einer abschließenden Betonschicht eine Styroporschicht vorgesehen ist, in die zahlreiche Rillen eingearbeitet sind. In den Rillen der Styroporschicht sind Kapillarrohre eingesetzt, die von einer temperierenden Flüssigkeit durchströmt sind.

Schließlich ist aus der DE 29 16 799 B1 eine quarderförmige Heiß- und Kühleinheit bekannt, die bevorzugt einstückig aus einem Keramikschaum gefertigt ist, in den zick-zack-förmig ein Kanalmuster eingearbeitet ist. Die Kanäle sind nach außen mit Anschlussstücken versehen, durch die eine Flüssigkeit der Einheit zugeführt und aus der Einheit abgezogen werden kann. Die Wandungen der bekannten Heiß- und Kühleinheit sollen eine höhere Wärmeleitfähigkeit aufweisen als der Keramikschaum im Inneren der Heiß- und Kühleinheit.

Der Erfinder erkannte es als einen großen Nachteil, dass die aus dem oben diskutierten Stand der Technik bekannten Einheiten zur Erwärmung von Räumen nicht direkt in bereits vorhandene Kühl- und Heizungskreisläufe eingebunden werden können, da alle bekannten wärmetauschenden Einheiten zwar dicht gegenüber den in ihnen fließenden Flüssigkeiten, hingegen nicht ausreichend dicht gegenüber der Außenluft sind. Durch die Außenhülle der bekannten wärmetauschenden Elemente durchdringenden Sauerstoff kann es so zu Korrosionserscheinungen an den aus Metall oder Grauguss gefertigten Bauteilen in bereits vorhandenen Kühl- und Heizungskreisläufen kommen, in deren Folge die Durchströmungskanäle insbesondere der wärmetauschenden Elemente mit Rostschlamm verstopfen. Vor diesem Hintergrund sind die bekannten wärmetauschenden Elemente ausschließlich in separaten Wasserkreisläufen zu betreiben, in denen nur nicht-korrosive Materialien Verwendung finden. Die Realisierung einer hydraulischen Trennung von vorhandenen Kühl- und Heizungskreisläufen zu neu zu installierenden Wasserkreisläufen für die wärmetauschenden Elemente ist jedoch kostenintensiv und die einzusetzenden Wärmetauscher weisen zu geringe thermische Wirkungsgrade auf.

Es ist folglich Aufgabe der vorliegenden Erfindung, der Öffentlichkeit flüssigkeitsdurchflutete Mittel zum Temperieren von Räumen zur Verfügung zu stellen, die in bauseitig bereits vorhandenen Kühl- und Heizungskreisläufen betrieben werden können.

Nach zahlreichen Versuchen erkannte der Erfinder, dass eine solche Aufgabe zu lösen ist mittels flüssigkeitsdurchfluteter Mittel zum Temperieren von Räumen

- mit einer ersten Abdeckplatte,

- mit einer der ersten Abdeckplatte gegenüberliegenden zweiten Abdeckplatte, die mit einer umlaufenden Aufkantung verbunden ist zur Ausbildung einer flüssigkeitsdichten Wanne,

- mit einer Vielzahl von Stegen, zwischen denen Durchflutungskanäle mit einer inneren Breite (d) im Inneren des durch die Wanne begrenzten Raums ausgebildet sind, wobei
die Durchflutungskanäle mit einer gemeinsamen Zuleitung und einer gemeinsamen Abführung verbunden sind, und
die Durchflutungskanäle zusammen mit der Zuleitung und der Abführung im Inneren des durch die Wanne begrenzten Raums ein Volumen ($V$) umschließen,
durch das Flüssigkeit zum Temperieren von Räumen hindurchführbar ist,

dadurch gekennzeichnet, dass

o die durch die zweite Abdeckplatte mit der umlaufenden Aufkantung begrenzte Wanne mit der ersten Abdeckplatte verschlossen ist zur Ausbildung einer sauerstoffdichten Ummantelung des Volumens (V), wobei die auf das Volumen ($V$) bezogene Sauerstoffdichtheit $O_d$ der folgenden Formel genügt:

$$O_d \leq 0{,}10 \text{ g} / (\text{m}^3 \cdot d)$$

In der obigen Formel mit g = Gramm und m³ = Kubikmeter ist d die innere Breite der Durchflutungskanäle; die Formel für die Sauerstoffdichtheit $O_d$ gibt letztendlich einen oberen Grenzwert für die maximal zulässige Sauerstoffdurchlässigkeit in Gramm (Sauerstoff) an. Die Bestimmung der Sauerstoffdichtheit $O_d$ geschieht im Sinne der vorliegenden Schrift gemäß den Vorgaben der DIN 4726 in der Fassung aus Januar 2000, wobei die für Rohrleitungen aus Kunststoff geltenden DIN-Vorgaben auf die erfindungsgemäßen Mittel zum Temperieren von Räumen sinngemäß zu übertragen sind.

Die Bemessung der Sauerstoffdichtheit $O_d$ erfolgt an einem durch die erste und zweite Abdeckplatte mit umlaufender Aufkantung begrenzten Körper, dem Wasser durch die gemeinsame Zuleitung zugeführt und durch die gemeinsame Abführung wieder entnommen werden kann. Nach Montage und rohrseitiger Verbindung erfolgt eine 24-stündige Relaxationszeit ohne Belastung. Danach wird der Körper einer Temperaturwechselbelastung mit einer Schaltzeit von (60 ± 30) sec unterworfen, wobei im Wechsel 15 Minuten warmes Wasser von 70°C ± 2 K (K = Kelvin) und 15 Minuten kaltes Wasser von ≤ 20°C durch die Durchflutungskanäle des Körpers strömt, bei einem Überdruck von 3 bar. Diese Temperaturwechselbelastung wird über 28 Tage aufrechterhalten. Im Anschluss daran erfolgt die Messung der Sauerstoffdurchlässigkeit bei einer mittleren Temperatur von 40°C ± 2 K. Die Temperaturdifferenz zwischen gemeinsamer Zuleitung und gemeinsamer Abführung darf 4 K nicht überschreiten. Es sind 3 Einzelmessungen durchzuführen. Der größte und der kleinste Wert dürfen sich um nicht mehr als 0,02 g / (m³ · $d$) unterscheiden. Der ermittelte Mittelwert, auf den sich die Formel lt. Anspruch 1 bzw. lt. Anspruch 8 bezieht, wird auf 2 Dezimalstellen gerundet.

Demnach genügt die auf das Volumen ($V$) bezogene Sauerstoffdichtheit $O_d$ der erfindungsgemäßen Mittel zum Temperieren von Räumen in einer bevorzugten Ausführungsform der folgenden Formel:

$$O_d \leq 0,085 \ g \ / \ (m^3 \cdot d)$$

In einer bevorzugten Ausführungsform sind die zweite Abdeckplatte und die mit ihr verbundene umlaufende Aufkantung einstückig ausgebildet. Auch wenn nicht darauf beschränkt, gilt es im Sinne der vorliegenden Erfindung als bevorzugt, wenn die zweite Abdeckplatte und die mit ihr verbundene umlaufende Aufkantung als ein zusammenhängendes Gussteil vorliegt, das aus

- einem - bevorzugt mindestens 1 mm dicken - Material auf Basis von Epoxydharz oder

- einem - bevorzugt mindestens 3 mm dicken - Material auf Basis von Polyurthanharz oder

- einem - bevorzugt mindestens 6 mm dicken - Material auf Basis von Polyesterharz
besteht. Die genannten Materialien, zu denen als weitere Alternative auch noch vernetztes Polyethylen gehört, können gegebenenfalls mit ergänzenden Komponenten vermischt sein, weshalb sich dann die beanspruchten Dicken etwas vergrößern können. In diesem Zusammenhang ist es bevorzugt, wenn die zweite Abdeckplatte insbesondere solche Füllstoffe aufweist, die die thermische Leitfähigkeit der zweiten Abdeckplatte steigern, wie beispielsweise Graphit oder Siliciumcarbid. Bei den oben aufgeführten Materialien verbunden mit ihrer gießtechnischen Aufbereitung können in einem besonderem Maße flüssigkeitsdurchflutete Mittel zum Temperieren von Räumen hergestellt werden, die die erfindungsgemäße Merkmale aufweisen. Alternativ zur einstückigen Ausbildung von zweiter Abdeckplatte und umlaufender Aufkantung als Gussteil oder idealerweise in Ergänzung dazu sind die zweite Abdeckplatte und die Stege, zwischen denen die Durchflutungskanäle ausgebildet sind, einstückig und als Gussteil ausgebildet.

Ein Gussteil aus zweiter Abdeckplatte und umlaufender Aufkantung und bevorzugt zusätzlich versehen mit den Stegen, zwischen denen die Durchflutungskanäle ausgebildet sind, wird hergestellt, in dem zunächst eine passende erste Gießform als Negativform bereitgestellt wird. Eine solche Gießform sieht an ihrem Boden Vertiefungen für die umlaufende Aufkantung — und, sofern vorgesehen, die Vertiefungen für die Stege — vor. Das gießfähig aufbereitete Material wird sodann in die Gießform eingeleitet, bis die Vertiefungen in der Gießform für die umlaufende Aufkantung und, sofern vorgesehen, für die Stege aufgefüllt sind. Weiteres gießfähiges Material wird eingeleitet, bis eine ausreichende Dicke für die zweite Abdeckplatte erreicht ist.

Wenn gewünscht, können zwecks Dekoration oder zur Verstärkung oder auch aus anderen Gründen auf den Flüssigkeitsspiegel für die auszubildende zweite Abdeckplatte Gitter, Geflechte oder Vliese aufgelegt oder eine oder mehrere weitere Schichten angegossen werden.

In einer bevorzugten Verfahrensergänzung wird nun ein flexibler Stempel beispielsweise aus Schaumstoff oder Gummi auf den Flüssigkeitsspiegel der auszubildenden zweiten Abdeckplatte mit hohem Druck aufgesetzt, um das eingegossene Material zu komprimieren und gegebenenfalls entstandene Luftblasen herauszupressen. Vor der abschließenden Entformung der dann fertig gestellten Wanne aus zweiter Abdeckplatte und umlaufende Aufkantung und gegebenenfalls aus den Stegen zwischen den Durchflutungskanälen erfolgt zumindest teilweise eine Trocknung und/oder Härtung. Nach der Entformung wird die Wanne gegebenenfalls endgetrocknet und/oder -gehärtet.

Es ist vorgesehen, dass auch die erste Abdeckplatte als Gussteil vorliegt. Zur Herstellung der ersten Abdeckplatte können die gleichen Materialien verwendet werden wie zur Herstellung der zweiten Abdeckplatte. Insbesondere gilt als bevorzugt, wenn die erste Abdeckplatte aus

- einem - bevorzugt mindestens 1 mm dicken - Material auf Basis von Epoxydharz oder

- einem - bevorzugt mindestens 3 mm dicken — Material auf Basis von Polyurthanharz oder

- einem — bevorzugt mindestens 6 mm dicken — Material auf Basis von Polyesterharz, gegebenenfalls mit ergänzenden Komponenten, wie beispielsweise Graphit oder Siliciumcarbid, besteht.

Die einstückige Herstellung von zweiter Abdeckplatte zusammen mit der Aufkantung und den Stegen zwischen den Durchflutungskanälen ist selbstverständlich nur als eine bevorzugte Variante zu sehen. Selbstverständlich ist es genauso möglich, die erste Abdeckplatte einstückig mit den Stegen zwischen den Durchflutungskanälen herzustellen, während die zweite Abdeckplatte einstückig mit der Aufkantung hergestellt wird. In einer vereinfachten Fassung können erste und zweite Abdeckplatte, verschiedene Komponenten zur Bildung einer gemeinsamen Aufkantung und die einzelnen Stege zwischen auszubildenden Durchflutungskanälen einzeln hergestellt und passend zusammen geklebt werden. Ein solches Verfahren beinhaltet jedoch zahlreiche, insbesondere wirtschaftliche Nachteile; auch ist die Sicherstellung einer Sauerstoffdichtheit in einem besonderen Maße von der Qualität der dann zahlreichen Verklebung abhängig, was zwar grundsätzlich möglich, aber eben umständlicher ist, als die gießtechnische Herstellung von Formstücken mit einer Vielzahl angeformter Komponenten.

Zur Fertigstellung der erfindungsgemäßen Mittel zum Temperieren von Räumen kann die vorgefertigte erste Abdeckplatte mit der vorgefertigten zweiten Abdeckplatte, letztere bevorzugt einstückig verbunden mit der umlaufenden Aufkantung und bevorzugt zusätzlich versehen mit den Stegen, zwischen denen die Durchflutungskanäle ausgebildet sind, flüssigkeits- und sauerstoffdicht verklebt werden. Bevorzugt ist jedoch ein Herstellungsverfahren, bei dem zunächst die zweite Abdeckplatte einstückig verbunden mit der umlaufenden Aufkantung und zusätzlich versehen mit den Stegen, zwischen denen die Durchflutungskanäle ausgebildet sind, fertig gestellt wird. Anschließend wird die erste Abdeckplatte als Gussteil bereitet. Dabei kann in eine zu verwendende zweite Gießform zunächst ein Gitter, Geflecht oder Vlies eingelegt werden zur späteren Verstärkung dieser auszubildenden ersten Abdeckplatte. Anschließend wird in die zweite Gießform das fließfähig aufbereitete Material für die nun zu erstellende erste Abdeckplatte in einer solchen Menge eingegeben, bis sich die gewünschte Dicke für die erste Abdeckplatte ergibt. In den Flüssigkeitsspiegel für die auszubildende erste Abdeckplatte werden nun die mit der zweiten Abdeckplatte verbundene Stege und die umlaufende Ummantelung eingedrückt, so dass nach Trocknung und/oder Härtung ein erfindungsgemäßes Mittel zum Temperieren von Räumen als einstückiges Werkstück vorliegt. Gleichgültig, wie die Verbindung der ersten mit der zweiten Abdeckplatte erfolgt, ist es nicht nötig, dass die erste Abdeckplatte und die zweite Abdeckplatte mit umlaufender Aufkantung aus dem gleichen Material besteht, jedoch ist eine solche Ausführung bevorzugt.

Es ist möglich, dass die erste Abdeckplatte angegossene Führungsstege aufweist, die passgenau einführbar sind in die Durchflutungskanäle, welche zwischen den an die zweite Abdeckplatte angegossenen Stegen ausgebildet sind. Die Stege verbreitem sich in einer bevorzugten Ausführungsform zur zweiten Abdeckplatte hin jeweils in Form eines Viertelkreises. Die Führungsstege weisen außenseitig jeweils eine senkrechte Wandung auf, während sie innen halbkreisförmig ausgeformt sind. Eingeführt in die Durchflutungskanäle entstehen durch die speziellen Ausformung der Stege und der Führungsstege kreisrunde Rohrgebilde, durch die eine zugeführte Flüssigkeit turbolenzfrei strömen kann.

Die erste und/oder zweite Abdeckplatte können durch eingearbeitete Gitter, Gewebe, Geflechte oder Vliese wie beispielsweise (Polyester-)Glasfasergewebe zur Steigerung des möglichen Innendrucks innerhalb der erfindungsgemäßen Mittel zum Temperieren von Räumen verstärkt sein. Die außenseitigen Oberflächen der ersten und/oder zweiten Abdeckplatte können zumindest teilweise so ausgebildet sein, dass sie anstreichbar und/oder tapezierbar sind. In einer bevorzugten Ausführungsform weist zumindest eine aus erster und zweiter Abdeckplatte Fliesen oder andere beschichtende Elemente auf. Auch können auf die erste und/oder zweite Abdeckplatte mosaikartig gestaltete Fliesen aus fließfähig aufbereitbarem Material angegossen werden. Selbstverständlich ist die Ausformung der ersten und/oder zweiten Abdeckplatte als Seifenhalter genauso möglich, wie werksseitig Befestigungsmittel wie beispielsweise Haltewinkel in die erfindungsgemäßen Mittel zum Temperieren von Räumen eingearbeitet sein können.

Werden die erfindungsgemäßen Mittel zum Temperieren von Räumen als Fußbodenbeläge in Nassräumen wie Duschen oder Badezimmer verlegt, kann die Ausgestaltung der erfindungsgemäßen Mittel mit einer rutschhemmenden und/oder geriffelten und/oder gerillten Oberflächenstruktur sinnvoll sein. Die erfindungsgemäßen Mittel sind letztlich mit jeder vorstellbaren Oberfläche, beispielsweise auch mit Spiegeln zu versehen und in unterschiedlichster Form, beispielsweise als Geländer oder Raumteiler mit beidseitig temperierender Oberfläche herstellbar.

In einer bevorzugten Ausführungsform ist die innere Breite ($d$) der Durchflutungskanäle kleiner oder gleich der Breite (s) der zwischen den Durchflutungskanälen gele**genen Stege.** Quer zur Verlaufsrichtung der Durchflutungskanäle sind pro Bezugseinheit von 1 cm bevorzugt mindestens 1 Durchflutungskanal und mindestens ein Steg ausgebildet. So zeigte sich in zahlreichen Versuchen, dass eine Breite ($d$) der Durchflutungskanäle von 2 bis 5 mm und eine Breite (s) der zwischen den Durchflutungskanälen gelegenen Stege von 2 bis 6 mm ausgezeichnete Versuchsergebnisse erwarten lässt. Es wird bevorzugt, wenn die Durchflutungskanäle zusammen mit der gemeinsamen Zuleitung und der gemeinsamen Abführung im Inneren des durch die Wanne begrenzten Raums ein Volumen ($V$) in einem Bereich von $(0,2$ bis $1,5) \cdot 10^{-3}$ m$^3$ umschließen.

Eingebunden in ein bestehendes Heizungs- und Kühlsystem werden die Durchflutungskanäle von einer Flüssigkeit durchströmt, wobei hier insbesondere Wasser vorgesehen ist. In Messversuchen konnten Strömungsgeschwindigkeiten für das Wasser in den Durchflutungskanälen von 5 bis 10 cm/sec festgestellt werden. Die Strömung des Wassers in den Durchflutungskanälen ist damit laminar.

Die Erfindung soll anhand der folgenden Figuren weiter veranschaulicht werden:

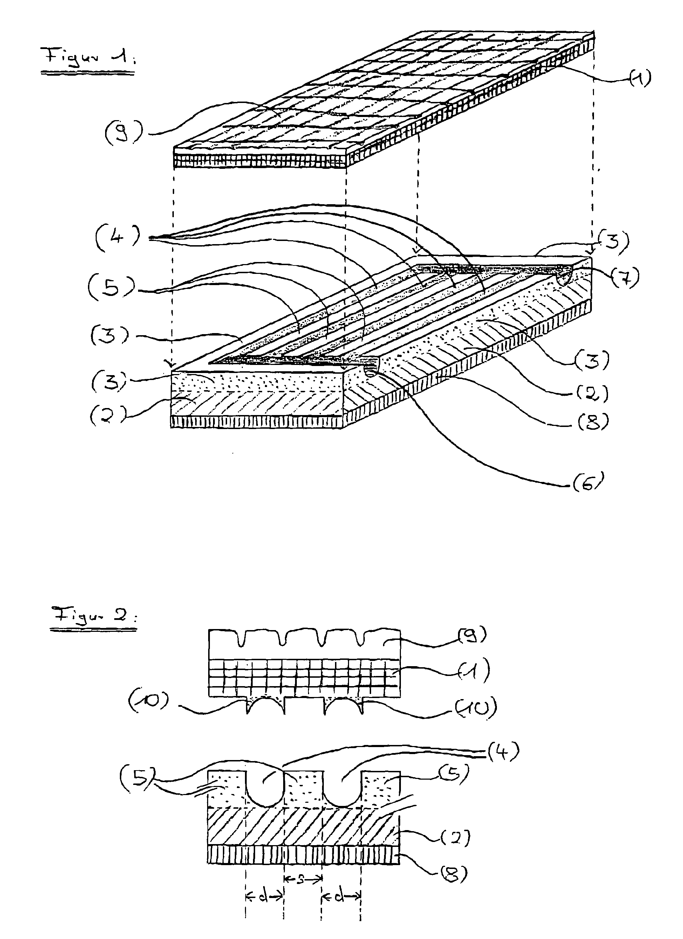

Figur 1 zeigt eine Ausführungsform der erfindungsgemäßen Mittel zum Temperieren von Räumen. Verbunden mit einer als Basis ausgestalteten zweiten Abdeckplatte (2) bildet eine umlaufende Aufkantung (3) eine flüssigkeitsdichte Wanne, in der Stege (5) vorgesehen sind, die sich zur zweiten Abdeckplatte (2) hin jeweils in Form eines Viertelkreises verbreitem. Zum oberen Abschluss der Wanne hin weisen die Stege (5) einheitlich eine Breite (s) auf. Zwischen den Stegen (5) sind Durchflutungskanäle (4) ausgearbeitet, die zum oberen Abschluss der Wanne hin eine einheitliche Breite (d) aufweisen. Die Durchflutungskanäle (4) sind auf der einen Seite mit einer gemeinsamen, die Aufkantung (3) durchbohrende Zuleitung (6) verbunden, durch die Wasser den Durchflutungskanälen (4) zugeführt werden kann. Gegenüber der Zuleitung (6) sind die Durchflutungskanäle (4) mit einer gemeinsamen Abführung (7) verbunden, die ihrerseits die Aufkantung (3) durchbohrt. Durch die Abführung (7) kann das Wasser aus den Durchflutungskanälen (4) wieder abgezogen werden. Unterhalb der zweiten Abdeckplatte (2), die zusammen mit der umlaufenden Aufkantung (3) und den Stegen (5) als einstückiges Formteil aus Epoxydharz besteht, ist ein Glasfasergewebe (8) dargestellt, das mit der zweiten Abdeckplatte (2) zu deren Verstärkung verklebt ist.

Zeichnerisch getrennt von der zweiten Abdeckplatte (2), die einstückig mit der umlaufenden Aufkantung (3) und den Stegen (5) verbunden ist, ist im oberen Teil der Figur die erste Abdeckplatte (1) dargestellt, die ebenfalls als Gussteil in diesem Fall aus Glasfaser verstärktem Polyesterharz hergestellt ist. Die erste Abdeckplatte (1) ist in diesem Fall mit einer aus angegossenem Material bestehenden Mosaikschicht (9) zur Darstellung einer Befliesung versehen.

Die erste Abdeckplatte (1) und die zweite Abdeckplatte (2) mit umlaufender Aufkantung (3) und den Stegen (5) werden abschließend flüssigkeits- und sauerstoffdicht miteinander verbunden. Auf diese Weise entstehen durch die Stege (5) voneinander getrennte Durchflutungskanäle (4) und die mit ihnen verbundenen gemeinsame Zuleitung (6) und die gemeinsamen Abführung (7).

Ein flüssigkeitsdurchflutetes Mittel zum Temperieren von Räumen entsprechend der in obiger Figurenbeschreibung hergestellten Art wird einer Sauerstoffdichtheitsprüfung unterzogen, wie sie weiter oben in der Beschreibung unter Verweis auf die Vorgaben der DIN 4726 beschrieben wurde. Dabei wurden folgende Werte ermittelt:

$O_{d,1}$: = 0,079 g;

$O_{d,2}$: = 0,081 g;

$O_{d,3}$: = 0,080 g.

Die innere Breite ($d$) der Durchflutungskanäle (4) beträgt dabei 5 mm, die Durchflutungskanäle (4) umschließen zusammen mit der Zuleitung (6) und der Abführung (7) im Inneren des durch die Wanne begrenzten Raums ein Volumen ($V$) von $0,9 \cdot 10^{-3}$ m$^3$.

Figur 2 zeigt als Detailzeichnung einen kleinen Bereich zunächst der zweiten Abdeckplatte (2), die identisch ausgeführt sein soll wie die aus Figur 1, was bedeutet, dass die zweite Abdeckplatte (2) zusammen mit der umlaufenden Aufkantung (3) und den Stegen (5) als einstückiges Formteil aus Epoxydharz hergestellt ist. Unterhalb der zweiten Abdeckplatte (2) ist ein Glasfasergewebe (8) dargestellt, das mit der zweiten Abdeckplatte (2) zu deren Verstärkung verklebt ist. Die erste Abdeckplatte (1) weist hier, als Alternative zu der aus Figur 1, angegossene Führungsstege (10) auf, die passgenau einführbar sind in die Durchflutungskanäle (4), welche zwischen den an die zweite Abdeckplatte (2) angegossenen Stege (5) ausgebildet sind. Die Führungsstege (10) weisen dabei außenseitig eine senkrechte Wandung auf, während sie innen halbkreisförmig ausgeformt sind. Eingeführt in die Durchflutungskanäle (4) entstehen durch die spezielle Ausformung der Führungsstege (10) kreisrunde Rohrgebilde, durch die eine zugeführte Flüssigkeit turbolenzfrei strömen kann.

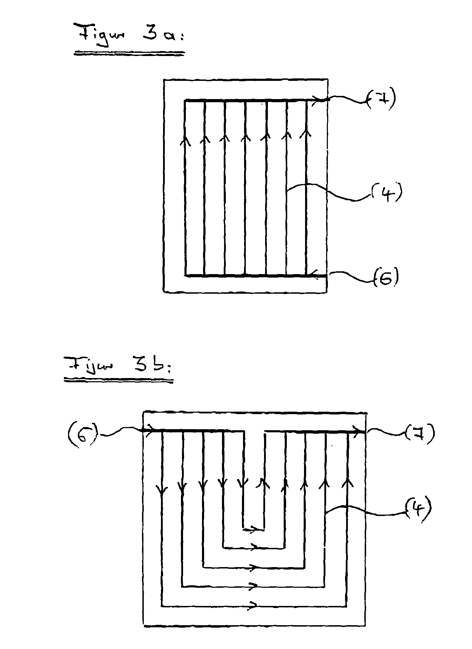

Die Figuren 3a und 3b zeigen eine nicht abschließende Auswahl möglicher Anordnungen für die gemeinsame Zuleitung (6) und für die gemeinsame Abführung (7), jeweils verbunden mit einer Vielzahl von Durchflutungskanälen (4) als schematische Fließzeichnungen.

Begriffsliste:

(1) erste Abdeckplatte

(2) zweite Abdeckplatte

(3) Aufkantung

(4) Durchflutungskanäle

(5) Stege

(6) Gemeinsame Zuleitung
(7) Gemeinsame Abführung
(8) Glasfasergewebe
(9) Mosaikschicht
(10) Führungsstege
(d) Breite der Durchflutungskanäle (4)
(s) Breite der Stege (5)

**Patentansprüche**

1. Flüssigkeitsdurchflutete Mittel zum Temperieren von Räumen

   • mit einer ersten Abdeckplatte (1),
   • mit einer der ersten Abdeckplatte (1) gegenüberliegenden zweiten Abdeckplatte (2), die mit einer umlaufenden Aufkantung (3) verbunden ist zur Ausbildung einer flüssigkeitsdichten Wanne,
   • mit einer Vielzahl von Stegen (5), zwischen denen Durchflutungskanäle (4) mit einer inneren Breite (d) im Inneren des durch die Wanne begrenzten Raums ausgebildet sind, wobei die Durchflutungskanäle (4) mit einer gemeinsamen Zuleitung (6) und einer gemeinsamen Abführung (7) verbunden sind, und die Durchflutungskanäle (4) zusammen mit der Zuleitung (6) und der Abführung (7) im Inneren des durch die Wanne begrenzten Raums ein Volumen ($V$) umschließen, durch das Flüssigkeit zum Temperieren von Räumen hindurchführbar ist,

   **dadurch gekennzeichnet, dass**

   o die durch die zweite Abdeckplatte (2) mit der umlaufenden Aufkantung (3) begrenzte Wanne mit der ersten Abdeckplatte (1) verschlossen ist zur Ausbildung einer sauerstoffdichten Ummantelung des Volumens (V), wobei die auf das Volumen ($V$) bezogene Sauerstoffdichtheit $O_d$ der folgenden Formel genügt:

$$O_d \leq 0{,}10 \ g / (m^3 \cdot d)$$

2. Flüssigkeitsdurchflutete Mittel zum Temperieren von Räumen nach Anspruch 1, **dadurch gekennzeichnet, dass** die zweiten Abdeckplatte (2) und die mit ihr verbundene umlaufende Aufkantung (3) einstückig ausgebildet sind.

3. Flüssigkeitsdurchflutete Mittel zum Temperieren von Räumen nach Anspruch 2, **dadurch gekennzeichnet, dass** die zweite Abdeckplatte (2) und die mit ihr verbundene umlaufende Aufkantung (3) einstückig gebildet sind aus

   - einem mindestens 1 mm dickem Material auf Basis von Epoxydharz oder
   - einem mindestens 3 mm dickem Material auf Basis von Polyurthanharz oder
   - einem mindestens 6 mm dickem Material auf Basis von Polyesterharz.

4. Flüssigkeitsdurchflutete Mittel zum Temperieren von Räumen nach einem der Ansprüche 1 bis 3, **dadurch gekennzeichnet, dass** die zweiten Abdeckplatte (2) und die Stege (5), zwischen denen die Durchflutungskanäle (4) ausgebildet sind, einstückig ausgebildet sind.

5. Flüssigkeitsdurchflutete Mittel zum Temperieren von Räumen nach einem der Ansprüche 1 bis 4, **dadurch gekennzeichnet, dass** die innere Breite ($d$) der Durchflutungskanäle (4) $\leq$ der Breite (s) der Stege (5) ist.

6. Flüssigkeitsdurchflutete Mittel zum Temperieren von Räumen nach einem der Ansprüche 1 bis 5, **dadurch gekennzeichnet, dass** quer zur Verlaufsrichtung der Durchflutungskanäle (4) pro Bezugseinheit von 1 cm mindestens 1 Durchflutungskanal (4) und ein Steg (5) ausgebildet sind.

7. Flüssigkeitsdurchflutete Mittel zum Temperieren von Räumen nach einem der Ansprüche 1 bis 6, **dadurch gekennzeichnet, dass** die erste Abdeckplatte (1) gebildet ist aus

   - einem mindestens 1 mm dickem Material auf Basis von Epoxydharz oder
   - einem mindestens 3 mm dickem Material auf Basis von Polyurthanharz oder
   - einem mindestens 6 mm dickem Material auf Basis von Polyesterharz.

8. Flüssigkeftsdurchtlutete Mittel zum Temperieren von Räumen nach einem der Ansprüche 1 bis 7, **dadurch gekennzeichnet, dass** die auf das Volumen ($V$) bezogene Sauerstoffdichtheit $O_d$ der folgenden Formel genügt:

$$O_d \leq 0{,}085 \ g / (m^3 \cdot d)$$

**Geänderte Patentansprüche gemäss Regel 86(2) EPÜ.**

1. Flüssigkeitsdurchflutete Mittel zum Temperieren von Räumen

- mit einer ersten Abdeckplatte (1),
- mit einer der ersten Abdeckplatte (1) gegenüberliegenden zweiten Abdeckplatte (2), die mit einer umlaufenden Aufkantung (3) verbunden ist zur Ausbildung einer flüssigkeitsdichten Wanne,
- mit einer Vielzahl von Stegen (5), zwischen denen Durchflutungskanäle (4) mit einer inneren Breite ($d$) im Inneren des durch die Wanne begrenzten Raums ausgebildet sind, wobei die Durchflutungskanäle (4) mit einer gemeinsamen Zuleitung (6) und einer gemeinsamen Abführung (7) verbunden sind, und die Durchflutungskanäle (4) zusammen mit der Zuleitung (6) und der Abführung (7) im Inneren des durch die Wanne begrenzten Raums ein Volumen (V) umschließen, durch das Flüssigkeit zum Temperieren von Räumen hindurchführbar ist,

**dadurch gekennzeichnet, dass**

o mindestens die erste Abdeckplatte (1) und die zweite Abdeckplatte (2) jeweils als Gussteil ausgebildet ist,
o die durch die zweite Abdeckplatte (2) mit der umlaufenden Aufkantung (3) begrenzte Wanne mit der ersten Abdeckplatte (1) verschlossen ist zur Ausbildung einer sauerstoffdichten Ummantelung des Volumens (V), wobei die auf das Volumen (V) bezogene Sauerstoffdichtheit $O_d$ der folgenden Formel genügt:

$$O_d \leq 0{,}10 \text{ g} / (\text{m}^3 \cdot d)$$

**2.** Flüssigkeitsdurchflutete Mittel zum Temperieren von Räumen nach Anspruch 1, **dadurch gekennzeichnet, dass** die zweiten Abdeckplatte (2) und die mit ihr verbundene umlaufende Aufkantung (3) einstückig ausgebildet sind.

**3.** Flüssigkeitsdurchflutete Mittel zum Temperieren von Räumen nach Anspruch 2, **dadurch gekennzeichnet, dass** die zweite Abdeckplatte (2) und die mit ihr verbundene umlaufende Aufkantung (3) einstückig gebildet sind aus

- einem mindestens 1 mm dickem Material auf Basis von Epoxydharz oder
- einem mindestens 3 mm dickem Material auf Basis von Polyurthanharz oder
- einem mindestens 6 mm dickem Material auf Basis von Polyesterharz.

**4.** Flüssigkeitsdurchflutete Mittel zum Temperieren von Räumen nach einem der Ansprüche 1 bis 3, **dadurch gekennzeichnet, dass** die zweiten Abdeckplatte (2) und die Stege (5), zwischen denen die Durchflutungskanäle (4) ausgebildet sind, einstückig ausgebildet sind.

**5.** Flüssigkeitsdurchflutete Mittel zum Temperieren von Räumen nach einem der Ansprüche 1 bis 4, **dadurch gekennzeichnet, dass** die innere Breite ($d$) der Durchflutungskanäle (4) ≤ der Breite (s) der Stege (5) ist.

**6.** Flüssigkeitsdurchflutete Mittel zum Temperieren von Räumen nach einem der Ansprüche 1 bis 5, **dadurch gekennzeichnet, dass** quer zur Verlaufsrichtung der Durchflutungskanäle (4) pro Bezugseinheit von 1 cm mindestens 1 Durchflutungskanal (4) und ein Steg (5) ausgebildet sind.

**7.** Flüssigkeitsdurchflutete Mittel zum Temperieren von Räumen nach einem der Ansprüche 1 bis 6, **dadurch gekennzeichnet, dass** die erste Abdeckplatte (1) gebildet ist aus

- einem mindestens 1 mm dickem Material auf Basis von Epoxydharz oder
- einem mindestens 3 mm dickem Material auf Basis von Polyurthanharz oder
- einem mindestens 6 mm dickem Material auf Basis von Polyesterharz.

**8.** Flüssigkeitsdurchflutete Mittel zum Temperieren von Räumen nach einem der Ansprüche 1 bis 7, **dadurch gekennzeichnet, dass** die auf das Volumen (V) bezogene Sauerstoffdichtheit $O_d$ der folgenden Formel genügt:

$$O_d \leq 0{,}085 \text{ g} / (\text{m}^3 \cdot d)$$

Figur 1:

Figur 2:

Figur 3a:

(7)

(4)

(6)

Figur 3b:

(6)

(7)

(4)

**Europäisches Patentamt**

**EUROPÄISCHER RECHERCHENBERICHT**

Nummer der Anmeldung

EP 05 01 2320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 2004/182557 A1 (STROOBANTS MARCEL ET AL) 23. September 2004 (2004-09-23) * Absätze [0022] - [0025], [0045] - [0050], [0067] - [0073]; Ansprüche 1,3,8; Abbildungen 1,2,4 * ----- | 1-4 | F24D3/16 F28F21/06 E04F15/02 E04F15/10 E04F13/08 E04B5/48 |
| Y | "Heizrohre und elektrische Heizleitungen in Fussbodenheizungen" März 2004 (2004-03), BUNDESVERBAND FLÄCHENHEIZUNGEN E. V. , HAGEN , XP002352399 Gefunden im Internet: URL:www.flaechenheizung.de> [gefunden am 2005-11-02] * Seite 4, Spalte 1, Absatz 1 * * Seite 4, Spalte 2, Absatz 1 * ----- | 1-4 | |
| X | WO 01/59371 A (KENNEDY, PHILIP, ANDREW) 16. August 2001 (2001-08-16) * Seite 1, Absatz 1 * * Seite 6, Absatz 6 - Seite 7, Absatz 4; Ansprüche 1,2; Abbildungen 1-3 * ----- | 1,2,4,8 | |
| A | DE 10 74 247 B (FELLER FRITZ) 9. Januar 1960 (1960-01-09) ----- | 1-7 | RECHERCHIERTE SACHGEBIETE (Int.Cl.7) F24D E04F E04B F28F |
| A | US 4 662 561 A (DIETZSCH ET AL) 5. Mai 1987 (1987-05-05) * das ganze Dokument * ----- | 1,2,4 | |
| A | DE 32 03 728 A1 (STIEBEL ELTRON GMBH & CO KG) 11. August 1983 (1983-08-11) * Seite 6, Absatz 2 - Seite 7, Absatz 2; Ansprüche 1,4,5; Abbildung 1 * ----- | 1 | |
| A | EP 0 026 421 A (EGEPLAST WERNER STRUMANN GMBH & CO) 8. April 1981 (1981-04-08) * das ganze Dokument * ----- | 1,8 | |

-/--

Der vorliegende Recherchenbericht wurde für alle Patentansprüche erstellt

| Recherchenort | Abschlußdatum der Recherche | Prüfer |
|---|---|---|
| München | 3. November 2005 | Leclaire, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 05 01 2320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 101 27 709 A1 (HEINEMANN, TORSTEN) 27. Juni 2002 (2002-06-27) * Abbildung 3 * ----- | | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| München | 3. November 2005 | Leclaire, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 01 2320

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2005

| Im Recherchenbericht angeführtes Patentdokument | Datum der Veröffentlichung | Mitglied(er) der Patentfamilie | Datum der Veröffentlichung |
|---|---|---|---|
| US 2004182557 A1 | 23-09-2004 | AU 2467102 A<br>WO 0248629 A1<br>BE 1013874 A3<br>CA 2470261 A1<br>EP 1360448 A1<br>JP 2004523716 T | 24-06-2002<br>20-06-2002<br>05-11-2002<br>20-06-2002<br>12-11-2003<br>05-08-2004 |
| WO 0159371 A | 16-08-2001 | AU 3038201 A<br>EP 1409927 A1<br>GB 2361529 A<br>US 2003106275 A1 | 20-08-2001<br>21-04-2004<br>24-10-2001<br>12-06-2003 |
| DE 1074247 B | | KEINE | |
| US 4662561 A | 05-05-1987 | DE 3516444 A1<br>FR 2567255 A1<br>IT 1184629 B<br>SE 8503270 A | 16-01-1986<br>10-01-1986<br>28-10-1987<br>06-01-1986 |
| DE 3203728 A1 | 11-08-1983 | KEINE | |
| EP 0026421 A | 08-04-1981 | DE 7927416 U1<br>FI 802926 A | 17-01-1980<br>28-03-1981 |
| DE 10127709 A1 | 27-06-2002 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5267611 A
- SU 1165868 A
- DE 19780808 T
- DE 2916799 B1